# EUROPEAN PATENT SPECIFICATION

(11) **EP 4 434 606 B1**
(45) Date of publication and mention of the grant of the patent: **29.07.2026**
(21) Application number: 22908990.9
(22) Date of filing: 20.12.2022
(51) Int. Cl.: B01D 47/00, B01D 47/02, B01D 47/06

(54) **SMART HIGH-PRESSURE SYSTEM WITH SPRAYERS FOR SPRAYING AN END PRODUCT IN EMULSION WITH WATER TO SUPPRESS DUST EMITTED DURING THE MOVEMENT OF CEREALS**
INTELLIGENTES HOCHDRUCKSYSTEM MIT SPRÜHVORRICHTUNGEN ZUM VERSPRÜHEN EINES ENDPRODUKTS IN EMULSION MIT WASSER ZUR UNTERDRÜCKUNG DES STAUBES WÄHREND DER GETREIDEBEWEGUNG
SYSTÈME INTELLIGENT HAUTE PRESSION POURVU D'ASPERSEURS PULVÉRISANT UN PRODUIT FINAL EN ÉMULSION AVEC DE L'EAU POUR SUPPRIMER LES POUSSIÈRES ÉMISES PENDANT LES DÉPLACEMENTS DE CÉRÉALES

(30) Priority: 20.12.2021 AR P210103587
(43) Date of publication of application: 25.09.2024
(73) Proprietor: Mazza, Marcos, 1744 Moreno Buenos Aires (AR)
(72) Inventor: Mazza, Marcos, 1744 Moreno Buenos Aires (AR)
(74) Representative: Araujo, Daniel
(86) International application number: PCT/CL2022/050132
(87) International publication number: WO 2023/115236

(56) References cited:
- WO-A1-2017/220587
- WO-A1-2018/011009
- CN-A- 104 667 646
- CN-A- 110 433 592
- CN-A- 113 786 699

## Description

### FIELD OF THE INVENTION

The present invention refers to a smart high-pressure sprayer system for spraying a water emulsion final product to suppress the dust emitted during grain movements and in the agricultural industry, particularly in grain shipping and storage terminals, as well as in oilproducing plants, such as in the case of neutral soybean oil, corn oil, glycerin, 10% formic acid glycerin.

### BACKGROUND OF THE INVENTION

Cereal handling from the field to consumers results in more broken grains, and therefore more dust. Additionally, dust collection systems can sometimes increase the risk of fire. Techniques are also known that apply pure products and those of mineral origin directly on cereals. See for example WO2018/011009.

Also known are publications of patent documents that deserve to be mentioned, and which refer to dust suction and collection techniques, namely:
Publication CN109078429 (A) refers to a water-circulating dust removal system for grain drying, which comprises a water-circulating tank, an air purification system, a water purification system, and a control device, and is characterized in that the air purification system comprises a dust removal chamber, a dust extractor and a sprayer, the dust extractor and the sprayer being arranged in the dust removal chamber from bottom to top, and the water-circulating tank supplying water for the sprayer; the water purification system comprises a solid-liquid separation zone, a sludge zone and a clean water zone, wherein the water separated by the solid-liquid separation zone passes through the bottom of the solid-liquid separation zone and flows to the clean water zone through a pipeline, and the water separated by the sludge zone passes through the top of the sludge zone and flows to the clean water zone through a pipeline.

Publication CN101502735 (A) refers to an efficient system for trapping micro-nanometer dust in the air. The invention comprises an air trapping opening, a filter core, a sprayer, a big and small flow micro pump, an atomizing nozzle, a liquid storage chamber, trapping liquid, a baffle, and a vacuum pump, which construct an airflow route and a liquid circulation route, to efficiently capture the micrometer and nanometer dust composed of various grains. By changing the variety of the trapping liquid or adjusting the hydrophile-lipophile balance (HLB) value of the trapping liquid and improving the wettability of the trapping liquid and the nano dust in the air, micro nanometer fiber, thin sheet dust and other solid dust particles of various forms, containing micro-nano particles, can be efficiently trapped. The invention contains a plurality of air-liquid continuous contact processes, the air containing dust and the trapping liquid are only mixed and absorbed in the system, thus efficiently trapping nanodust in the air of various dust-density environments, including the workplace.

Publication CN205886468 (U) refers to dust collection equipment and discloses a high-pressure integrated form of fine dust-removing water mist system, which includes a box or cabin, wetting filter equipment, a water storage device, a supercharging and atomizer device, and further comprises a detachable construction structure, hydrating filter equipment, a water storage device, where the supercharging device and the atomizer are all integrated, the external water source is connected to the water inlet of the hydrating filter equipment, and a water storage device is used for water after storage is filtered, the water inlet of the supercharging device is linked to the outlet of the water tank, said outlet being connected to the atomizer, and this supercharging device is placed with the water extraction unit of the water storage device and the pressure boosts the high pressure spray pipe, the droplet being of uniform micron order which is distributed through high-pressure swirl injector with water explosion spraying, dust drop showing that high-pressure fine water smoke removes dust. The invention features a compact structure, with a small area and a high automation degree resulting in a good dust removal effect.

In this way, it is to be understood that the main problem lies in the emission of particulate matter (pollution) caused by the movement of cereals and by-products, together with economic loss suffered by companies due to volatile losses.

### SUMMARY OF THE INVENTION

It is then an object of the present invention to provide a device for capturing and retaining the particulate material released from cereal grains, employing electrostatic difference action by the use of a pure product of processed and organic vegetable origin in a water-emulsion, applied at high pressure on the batch of grains, which leads to a direct economic benefit for the companies and does not affect other parameters of the treated products (protein dilution, development of microorganisms such as salmonella, Escherichia coli, bacteria, mycotoxins, etc.), thereby obtaining a fundamental agri-food quality. An emulsion is a heterogeneous mixture of two immiscible liquids. One liquid (the dispersed phase) is dispersed in another (the continuous phase or dispersing phase).

It is also an object of the present invention to provide a smart system that works at a pressure between 40 bar (40.7886 Kg/cm2) to 200 bar (203.943 kg/cm2) depending on the area in which the end product is applied and with components such as two liquid tanks (water and vegetable oil), liquid pumps, spray nozzles, material detection barriers on belts, spray barriers behind grain unloading trucks, and electronic automation components, among others, with programming software previously filed for registration (DNDA Reg. No. RE2021-42985876-APN-DNDA).

It is, therefore, an object of the present invention to provide a smart high-pressure system with sprayers for spraying an emulsified final product to suppress the dust emitted during the movement of cereals, at a pressure between 40 bar (40.7886 20 Kg/cm2) to 200 bar (203.943 kg/cm2), applied in the agricultural field, preferably in shipping and grain storage terminals, as well as in plants producing vegetable oils such as neutral soybean oil, corn oil, glycerin, glycerin with 10% formic acid, and which comprises a first and second fluid management modules, operationally linked to each other, through a circuit having a spraying arrangement with multiple electronic automation components related to a programmable logic controller (PLC), arranged on a general board (11), where the first module (M1) has a tank (1) containing organic vegetable oil (Av) and the second module (M2) has a tank (2) containing water (Ag). In turn, both modules (M1, M2) are associated with a circuit that contains a secondary motor pump (3,4,5 and 6) with a check valve (17), as a means of suctioning fluids through a pipe branch (14) connecting to said container tanks (1,2). The inventive system also includes a connector coupling (15) with an elbow (16) linked to a spiral hose (18) attached to a coupling (19) of an elbow (20) with a nipple (21) connected to a T connector (22) in turn continuous with a nipple (23) coupled to a T connector (24) and another nipple (25) associated with a set of components defined by a flapper valve (26), a nipple (27), a flowmeter (28), a nipple (29), a coupler (30) with a connector coupling (31), in addition to a watertight box (32) and a dispenser (34) with a pipe branch (33) managing fluids and in turn linked to another secondary fluid outlet branch linked in turn to another secondary fluid outlet branch (rsav, rsag) linked to a main pipe branch for circulation of the end powder product (Ag + Av) suctioned by a main suction pump (7) and driven to a mechanism that contains automatic barriers (8,9) with spray nozzles (12,13) for spraying said final product on the cereal grains (Gc) to be treated.

### DESCRIPTION OF THE DRAWINGS

For the sake of clarity and a better understanding, the object of the present invention has been illustrated by several figures representing one of the preferred embodiments, all by way of example, in which:
Figure 1 is a schematic plane view of the components of the smart sprayer system to be protected.
Figure 2 illustrates the components involved in the operational modules included in said smart system.
Figure 3 shows an exemplary embodiment of the spraying system on a tipper platform.

### DETAILED DESCRIPTION OF THE EXEMPLARY EMBODIMENT

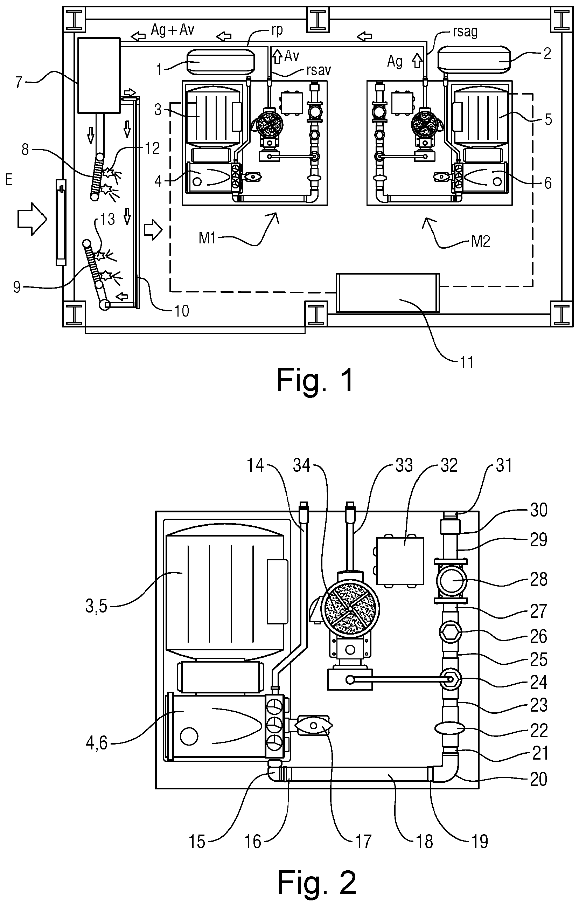

The components shown in Figure 1 are the following:
M1: first organic vegetable oil management module.
M2: second water fluid management module.
Ag: fluid water.
Av: vegetable oil product.
Ag + Av: dust-suppressing emulsified end product
rsag: water supply and circulation secondary pipe branch (Ag).
rsav: vegetable oil supply and circulation secondary pipe branch (Av).
rp: main pipe branch for circulation of dust-suppressing end product (Av + Ag)
E: Transport entry direction of the cereal grains to be treated.
1. Organic vegetable oil tank (Av).
2. Water fluid tank (Ag).
3. M1 engine.
4. M1 secondary pump.
5. M2 engine.
6. M2 secondary pump.
7. Main suction pump for the dust-suppressing emulsified end product (Ag + Av).
8. First automatic opening and closing barrier.
9. Second automatic opening and closing barrier.
10. Dust-suppressing end product transmission duct.
11. General system control panel.
12. Suppressant emulsified end product spray nozzle (Ag + Av).
13. Suppressant emulsified end product spray nozzle (Ag + Av).

Figure 2 shows the following components:
14. Pipeline branch (tubing 1").
15. Connector coupling (2" raccord).
16. 1" elbow.
17. Check valve.
18. Spiral coiled hose (2").
19. Connector coupling (2" raccord).
20. Elbow (2").
21. Nipple.
22. T connector, for 2" dosing connection.
23. Nipple.
24. T connector, for 2" dosing connection.
25. Nipple.
26. Flapper valve.
27. Nipple.
28. Flowmeter.
29. Nipple (2").
30. Coupling
31. Connector coupling (2" raccord).
32. Watertight box (150x150x100).
33. Fluid management pipe branch (3/4" tubing).
34. Dispenser (0.33 HP).

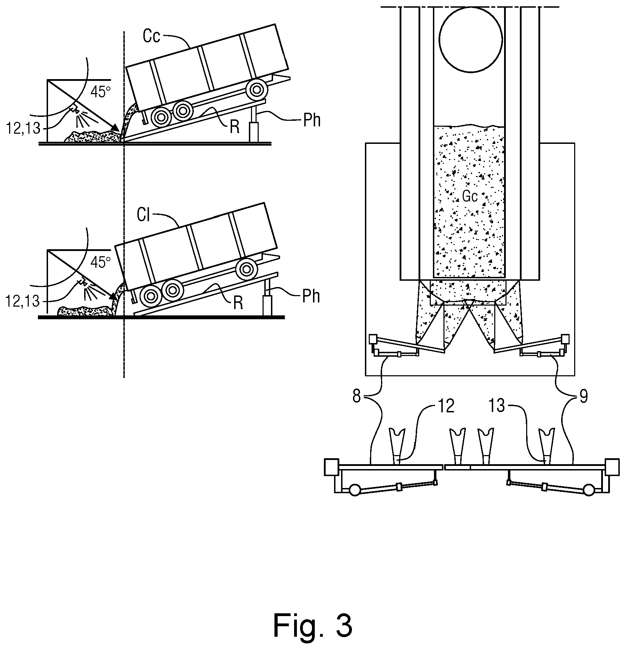

Figure 3 shows the following components:
Gc: Cereal grains.
A: Ramp.
P: Hydraulic piston.
Cc: Short truck.
CI: Long truck.
12,13. Spray nozzles for the dust-suppressing end product (Ag + Av).

Referring to Figures 1 and 2, the smart dust-suppressing system is unique on account of its purpose and functionality as able to emulsify the dust-suppressing product in water, which is achieved as follows:
Two tanks are arranged, one of water (Ag) raised at height (provided by the client's plant) and the other with another product (processed vegetable oil (Av)).

The water flows to a high-pressure piston motor pump (which can have different dimensions according to the flow rate of products to be treated).

The product (Av) is suctioned by another piston, diaphragm, or gear pump, and then injected into the water pipe with a check valve, in the appropriate proportion, to then obtain a dust-suppressing end product (Ag + Av) that flows towards the piston motor pump, where, in the same piston chamber, a superior and more homogeneous emulsion is made, and finally said end fluid product runs through a circuit of stainless steel pipes linked to high-pressure hoses of double and single metal mesh, directed to multiple stainless steel nozzles that spray said dust-suppressing end product on the merchandise that passes through a belt jump sector, well or tray conveyor header, on conveyor belts, a truck back loading and unloading sector, using the unique and exclusive automatic spray barrier system for dump trucks and any other convenient application point in the plant flow.

This entire circuit comprises a system with automation mechanisms connected to the plant signals that confirm the variation and presence of the material in the plant (amperage signal of the belt, tray conveyor, Redler transporting the merchandise) and reach a PLC where these signals are received and indicate the number of revolutions at which the motor pumps will operate, to regulate the frequency converters correspondingly.

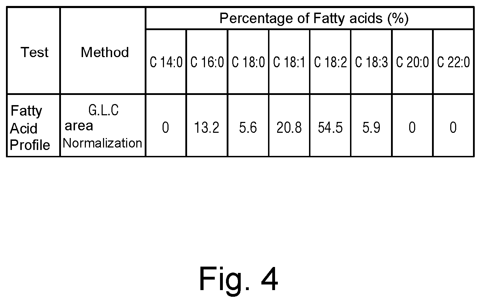

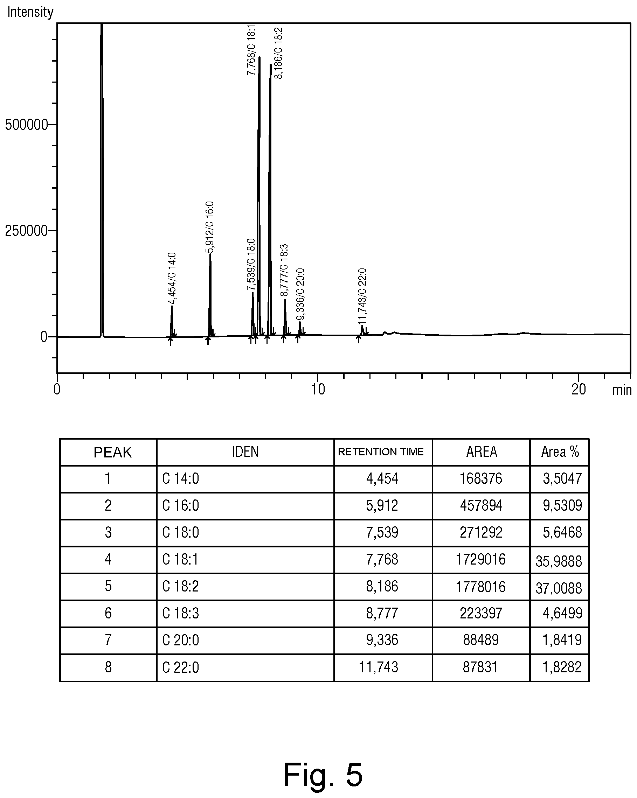

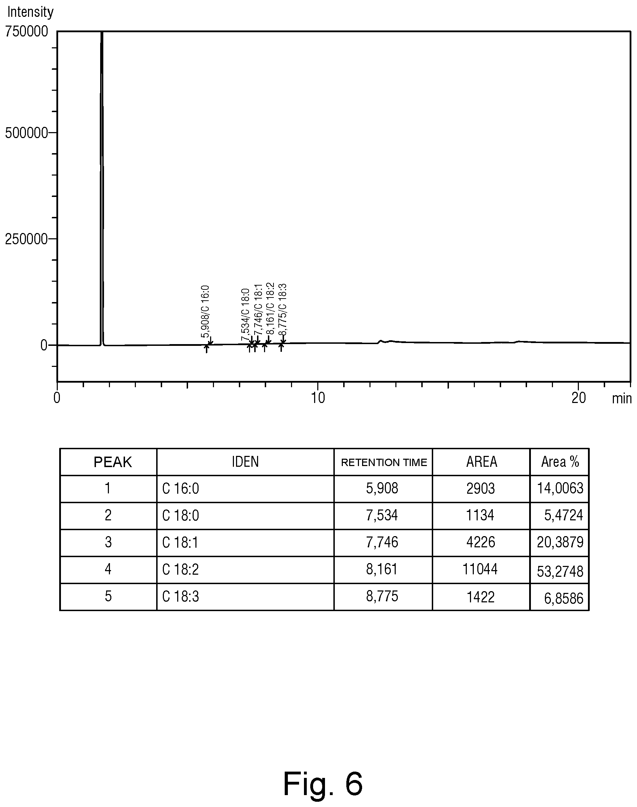

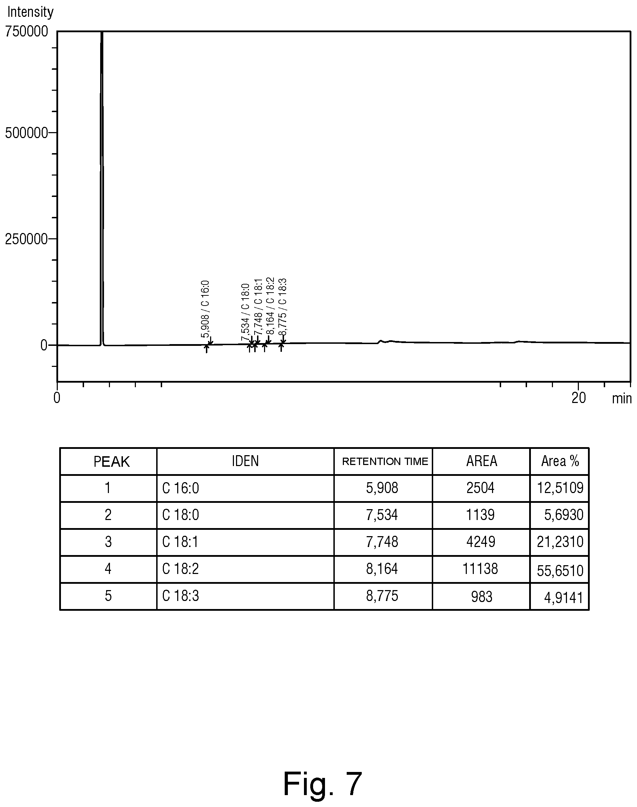

Depending on the processed vegetable oil (Av), carbon chains similar to the treated goods create a magnetic field that attracts the dust, as shown by the relevant tests in Figures 4, 5, 6, and 7.

The spray nozzles will have a defined angle, height, depth, and direction according to the average mass of material discharged by short and long trucks. The sprayer nozzles located under the grate will be left installed, two located with one at each end, with the possibility of activating them in case a better dispersion of the total flow is required. The automation will respond to the signals coming from the elevation, maximum point, and descent of the platform.

The barriers will be open before the truck enters the platform.

Only when the truck is embedded in the platform, barriers will be closed to bring the spray nozzles near the grain discharge.

According to Figure 3, the spray nozzles are placed at a height that exceeds the bulk of grains on the grates and are directed at an angle of 45° toward the cereal fall.

In the case of a short truck, the application occurs at the foot of the grain fall. In the case of long trucks, the application will take place in the middle of the fall.

In both cases, the spray will contact the grain within the distance along which the nozzle maintains its working pressure and, therefore, the grain will not volatilize to other points within the premises, such as the discharge pit.

Finally, it is to be noted that an optimal emulsion will be obtained if glycerin is used as it is a water-miscible product.

## Claims

1. Smart high-pressure sprayer system of an emulsified end product to suppress dust emitted during cereal grain movements, between 40 bar (40.7886 Kg/cm2) to 200 bar (203.943 kg/cm2), applied in the agricultural field, preferably in shipping and grain storage terminals, as well as in plants producing vegetable oils such as neutral soybean oil, corn oil, glycerin, glycerin with 10% formic acid, said system comprising a first and second fluid management modules, operationally linked to each other, through a circuit with a sprayer arrangement having multiple electronic automation components related to a programmable logic controller (PLC), arranged on a general board (11), **characterized in that** the first module (M1) comprises a tank (1) containing organic vegetable oil (Av) and the second module (M2) comprises a tank (2) containing water (Ag); and, in turn, both modules (M1,M2) are associated with a circuit that contains a secondary motor-pump (3,4,5 and 6) with a check valve (17), as a means of suctioning fluids through a pipe branch (14) connecting to said container tanks (1,2); and a connector coupling (15) is also included which comprises an elbow (16) linked to a spiral hose (18) attached to a coupling (19) with an elbow (20) having a nipple (21) connected to a T connector (22) in turn continuous with a nipple (23) coupled to a T connector (24) and another nipple (25) associated with a set of components defined by a flapper valve (26), a nipple (27), a flowmeter (28), a nipple (29), a coupler (30) with a connector coupling (31), and additionally a watertight box (32) and a dispenser (34) with a fluidmanaging pipe branch (33) linked in turn to another secondary fluid outlet branch (rsav, rsag) connected to a main pipe branch for circulation of the end powder product (Ag + Av) suctioned by a main suction pump (7) and driven to a mechanism that contains automatic barriers (8,9) with spray nozzles (12,13) for spraying said end product on the cereal grains (Gc) to be treated.

## Patentansprüche

1. Intelligentes Hochdruck-Sprühsystem für ein emulgiertes Endprodukt zur Unterdrückung von Staub, der bei der Bewegung von Getreidekörnern entsteht, zwischen 40 bar (40,7886 kg/cm²) und 200 bar (203,943 kg/cm²), das in der Landwirtschaft, vorzugsweise in Umschlag- und Kornlagern sowie in Anlagen zur Herstellung von Pflanzenölen wie neutralem Sojaöl, Maisöl, Glycerin, Glycerin mit 10 % Ameisensäure angewendet wird, wobei das System ein erstes und ein zweites Fluidmanagementmodul umfasst, die über einen Kreislauf mit einer Sprühanordnung mit mehreren elektronischen Automatisierungskomponenten, die mit einem speicherprogrammierbaren Controller (SPS) verknüpft sind, auf einer Hauptplatine (11) angeordnet, operativ miteinander verbunden sind, **dadurch gekennzeichnet, dass** das erste Modul (M1) einen Tank (1) umfasst, der organisches Pflanzenöl (Av) enthält, und das zweite Modul (M2) einen Tank (2) umfasst, der Wasser (Ag) enthält; und wobei beide Module (M1, M2) wiederum einem Kreislauf zugeordnet sind, der eine sekundäre Motorpumpe (3, 4, 5 und 6) mit einem Rückschlagventil (17) enthält, als Mittel zum Ansaugen von Fluiden durch einen Rohrzweig (14), der mit den Behältertanks (1, 2) verbunden ist; und wobei ferner eine Verbindungskupplung (15) beinhaltet ist, die ein Winkelstück (16) umfasst, das mit einem Spiralschlauch (18) gekoppelt ist, der an einer Kupplung (19) mit einem Winkelstück (20) befestigt ist, das einen Nippel (21) aufweist, der mit einem T-Stück (22) verbunden ist, das wiederum durchgehend mit einem Nippel (23) ist, der an ein T-Stück (24) gekoppelt ist, sowie einem weiteren Nippel (25), der einem Satz von Komponenten zugeordnet ist, definiert durch ein Klappenventil (26), einen Nippel (27), einen Durchflussmesser (28), einen Nippel (29), einen Kupplungsstück (30) mit einer Verbindungskupplung (31) sowie zusätzlich einer wasserdichten Box (32) und einem Spender (34) mit einem Fluidmanagement-Rohrzweig (33), der wiederum mit einem weiteren sekundären Fluidauslasszweig (rsav, rsag) verbunden ist, der an einen Hauptrohrzweig für die Umwälzung des Endpulverprodukts (Ag + Av) angeschlossen ist, das von einer Hauptansaugpumpe (7) angesaugt und zu einem Mechanismus befördert wird, der automatische Barrieren (8, 9) mit Sprühdüsen (12, 13) enthält, um das Endprodukt auf die zu behandelnden Getreidekörner (Gc) zu sprühen.

## Revendications

1. Système intelligent de pulvérisation à haute pression d'un produit fini émulsionné pour la suppression de poussière émise lors de mouvements de grains de céréales, entre 40 bars (40,7886 kg/cm²) et 200 bars (203,943 kg/cm²), appliqué dans le domaine agricole, de préférence dans les terminaux de transport et de stockage de céréales, ainsi que dans les usines produisant des huiles végétales telles que l'huile de soja neutre, l'huile de maïs, la glycérine, la glycérine avec 10 % d'acide formique, ledit système comprenant des premier et second modules de gestion de fluide, liés entre eux de manière opérationnelle, par le biais d'un circuit avec un agencement de pulvérisation ayant de multiples composants électroniques d'automatisation reliés à un automate programmable industriel (API), agencés sur une carte mère (11), **caractérisé en ce que** le premier module (M1) comprend un réservoir (1) contenant de l'huile végétale organique (Av) et le second module (M2) comprend un réservoir (2) contenant de l'eau (Ag) ; et, à leur tour, les deux modules (M1, M2) sont associés à un circuit qui contient une pompe à moteur secondaire (3, 4, 5 et 6) avec un clapet anti-retour (17), comme moyen d'aspiration de fluides par le biais d'un embranchement de conduite (14) raccordé auxdits réservoirs-citernes (1, 2) ; et un accouplement de raccord (15) est également inclus qui comprend un coude (16) relié à un tuyau spiralé (18) fixé à un accouplement (19) avec un coude (20) ayant un mamelon (21) relié à un raccord en T (22) lui-même en continuité avec un mamelon (23) accouplé à un raccord en T (24) et un autre mamelon (25) associé à un ensemble de composants définis par un clapet à battant (26), un mamelon (27), un débitmètre (28), un mamelon (29), un accoupleur (30) avec un accouplement de raccord (31), et en outre un boîtier étanche (32) et un distributeur (34) avec un embranchement de conduite de gestion du fluide (33) relié à son tour à un autre embranchement de sortie de fluide secondaire (rsav, rsag) raccordé à un embranchement de conduite principal pour la circulation du produit fini en poudre (Ag + Av) aspiré par une pompe d'aspiration principale (7) et acheminé vers un mécanisme qui contient des barrières automatiques (8, 9) avec des buses de pulvérisation (12, 13) destinées à pulvériser ledit produit fini sur les grains de céréales (Gc) à traiter.
